(19) Europäisches Patentamt / European Patent Office / Office européen des brevets

(11) **EP 3 384 169 B1**

(12) **EUROPEAN PATENT SPECIFICATION**

(45) Date of publication and mention
of the grant of the patent:
**17.02.2021 Bulletin 2021/07**

(21) Application number: **16871143.0**

(22) Date of filing: **07.10.2016**

(51) Int Cl.:
**F16B 35/06** *(2006.01)*

(86) International application number:
**PCT/SE2016/050965**

(87) International publication number:
**WO 2017/095292 (08.06.2017 Gazette 2017/23)**

(54) **WOOD SCREW WITH A HEAD HAVING A PERIPHERAL CUTTING EDGE**

HOLZSCHRAUBE MIT EINEM KOPF MIT EINER PERIPHEREN SCHNEIDKANTE

VIS À BOIS AYANT UNE TÊTE À BORD DE COUPE PÉRIPHÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2015 SE 1551590**

(43) Date of publication of application:
**10.10.2018 Bulletin 2018/41**

(73) Proprietor: **ESSVE Produkter AB**
**164 07 Kista (SE)**

(72) Inventors:
• **BERGFJORD, Mathias**
**416 48 Göteborg (SE)**
• **LARSSON, Linus**
**411 35 Göteborg (SE)**
• **LARSSON, Ove**
**426 74 Västra Frölunda (SE)**
• **LINDBERG, Christofer**
**187 52 Täby (SE)**
• **FALCK, Jörgen**
**455 92 Munkedal (SE)**

(74) Representative: **Zacco Sweden AB**
**P.O. Box 5581**
**114 85 Stockholm (SE)**

(56) References cited:
**EP-A1- 0 467 070     DE-A1- 10 038 660**
**FR-A1- 2 772 090     US-B1- 6 616 391**

## Description

Field of the Invention

The present invention relates to a screw with a head having a peripheral cutting edge for cutting into a workpiece.

Background of the Invention

Screws are used more and more in favor of nails for fastening of wooden and other building elements, generally referred to as workpieces. Most screws have conical heads that are supposed to sink into the workpiece at the final stage of installation of the screw. Such screws, however, tend to penetrate too far into the workpiece unless the installation torque is very precisely controlled. This requires a high level of attention from the installer, and may be rather time-consuming. Moreover, radial displacement of material in the workpiece by the conical head of traditional screws may result in an unwanted appearance of the finished result and/or possibly a weaker than desired fastening of the workpiece.

Mainly to solve the problem of an unwanted finished appearance when the workpiece is plastic composite lumber, US 6 616 391 discloses a screw having a head with an undercut head and radially projecting helical flutes on the shank. According to US 6 616 391, the undercut head may be provided with a series of unidirectional cutting teeth around the underside of the head periphery. Between the notches defining the teeth, the peripheral lip of the head is flat and perpendicular to the body of the screw.

Although the screw according to US 6 616 391 seems to represent a step forward for installation in plastic composite lumber, there appears to be room for improvement, in particular for workpieces made of fibrous materials, such as wood.

Summary

In view of the above-mentioned and other drawbacks of the prior art, it is an object of the present invention to provide an improved screw, and in particular to provide for improved interaction between the head of the screw and the workpiece.

According to the present invention, it is therefore provided a screw for fastening a workpiece to a structural member by rotating the screw in a rotational direction around a rotational axis of the screw, the screw comprising: a tip; a head having a top side for accommodating a tool to rotate the screw, and a bottom side having a peripheral cutting edge for cutting into the workpiece; and a thread extending from the tip towards the head, the thread having a thread lead, wherein the peripheral cutting edge exhibits a serrated profile with a plurality of cutting teeth, each of the cutting teeth being defined by a protrusion preceded by a leading recess and followed by a trailing recess when the screw is rotated in the rotational direction, and wherein, for each of the cutting teeth, a ratio between a lateral distance along a circumference of the head at the peripheral cutting edge from a bottom of the leading recess to a bottom of the trailing recess, and the circumference is less than or equal to a ratio between an axial distance from a tip of the protrusion between the leading recess and the trailing recess to the bottom of the trailing recess and the thread lead.

The thread lead defines the axial (downward) movement of the screw per turn (revolution) of the screw when the bottom side of the head touches the workpiece. The thread lead, in combination with the configuration of the serrated profile of the peripheral cutting edge, will determine the angle(s) between the cutting edges of the cutting teeth and the workpiece.

It should be understood that the thread need not extend uninterrupted from the tip towards the head of the screw, but that the thread may be wholly or partly absent at one or several locations from the tip to an end of the thread.

Moreover, the screw may comprise an unthreaded portion adjacent to the head of the screw.

The present invention is based upon the realization that cutting action, in particular for cutting fibers such as wood fibers, can be improved by configuring the peripheral cutting edge at the bottom side of the screw head to depend on the thread lead of the screw. In particular, the present inventors have realized that efficient and substantially non-compressing cutting of fibers in the workpiece can be achieved by configuring the peripheral cutting edge, in relation to the thread lead, in such a way that a purely axially directed force is not used for cutting fibers in the workpiece anywhere along the peripheral cutting edge.

To achieve this, the present inventors have found that, for each cutting tooth in the peripheral cutting edge, the ratio between the lateral distance from the bottom of the leading recess of the cutting tooth to the bottom of the trailing recess of the cutting tooth along the circumference of the head at the peripheral cutting edge, and the circumference should be less than or equal to the ratio between the axial distance from the tip of the protrusion of the cutting tooth to the bottom of the trailing recess of the cutting tooth and the thread lead. In this way, it is ensured that no part of the peripheral cutting edge will exert a purely axially directed force on the workpiece, but that the cutting edge of the next protrusion starts to cut fibers with an attack angle defined by the thread lead and the configuration of the protrusion before any portion between adjacent cutting teeth or notches is used for cutting fibers in the workpiece.

In addition to efficient cutting of fibers in the workpiece, the screw according to embodiments of the present invention compresses the portion of the workpiece circumscribed by the peripheral cutting edge substantially in an axial direction towards the tip of the screw. When the workpiece material that has been cut by the peripheral cutting edge is compacted, the resistance to further insertion of the screw increases much more distinctly than is the case for a conical screw head. As a result, there will be a relatively large torque range resulting in the screw being inserted to the proper depth in the workpiece. This, in turn, greatly facilitates installation of the screw. In addition, the force exerted by the head of the screw for pressing the workpiece to the structural member is substantially axially directed, which provides for more efficient and strong fastening of the workpiece. In addition, the risk of splitting a wooden workpiece, in particular close to an end of a plank or similar, is considerably reduced.

In various embodiments of the screw according to the present invention, each of the cutting teeth has a cutting edge between the bottom of the leading recess and the tip of the protrusion; the cutting edge moves in a cutting direction defined by the thread lead when the screw is rotated in the rotational direction, the cutting direction forming a first angle in relation to a plane perpendicular to the rotational axis of the screw; and an average angle along the cutting edge, between the cutting edge and the cutting direction may be at least one and a half times the first angle.

Through this configuration of the cutting teeth, even more efficient cutting of the workpiece is provided for, in particular when the workpiece is fibrous.

To ensure efficient cutting through the fibers of the workpiece, the width of the peripheral cutting edge may be less than 0.2 mm, at least at the tip of each of the protrusions, and advantageously also along the above-mentioned cutting edge of each cutting tooth.

In addition to efficiently cutting through fibers in the workpiece, the peripheral cutting edge may advantageously be configured in such a way that the user of the screw does not cut his or her finger or experiences discomfort from handling the screw. To that end, the tip of each of the protrusions may be rounded.

In embodiments, the tip of each of the protrusions may advantageously exhibit a radius of curvature that is greater than 0.5 mm.

According to various embodiments, the lateral distance along the circumference of the head at the peripheral cutting edge from the bottom of the leading recess to the bottom of the trailing recess may be substantially the same for each of the cutting teeth. In other words, the serrated profile may be periodic.

Advantageously, the peripheral cutting edge may exhibit at least eight cutting teeth.

In embodiments, the serrated profile may be undulating, such as sine-wave like. The smooth profile effectively reduces the risk of injury or discomfort when handling the screw.

To further reduce the risk of injury or discomfort, the above-mentioned axial distance from the tip of each protrusion to the bottom of an adjacent recess may be less than 1 mm.

To provide for easy and fast installation of the screw in the workpiece, it is, as was described further above, beneficial with a head that ensures a distinct stop for a suitable insertion depth of the screw in the workpiece. Another beneficial feature contributing to easy and fast installation of the screw is a low axial starting force.

To provide for the desired low axial starting force, the configuration of the thread in the close vicinity of the tip of the screw has been found to be important. In particular, the present inventors have realized that a rapid increase at the tip of the axially directed (towards the head of the screw) surface of the thread will result in a very efficient initial conversion of torque to axial force driving the screw into the workpiece.

By configuring the thread to quickly approach its maximum thread depth, the axial driving force of the screw will increase rapidly from the start of the rotation of the screw, resulting in a quick entry of the screw with reduced effort.

In particular, the inventors have found that a screw having a thread portion at the tip (the tip thread portion) that extends along one half turn or less around the rotational axis of the screw and exhibits a thread depth increase within the tip thread portion corresponding to at least one half of the maximum thread depth, will require a substantially lower axial force for initiating penetration into a workpiece than a traditional wood screw with similar overall dimensions. This in turn provides for improved ergonomics and increased productivity.

Even more advantageously, the thread depth increase within the tip thread portion may correspond to at least seventy percent of the maximum thread depth.

The thread depth increase within the tip thread portion may preferably be a monotonic increase to provide for the desired rapid increase of the axially directed surface of the thread.

To provide for the desired rapid starting action, the tip thread portion may advantageously be located at or very close to the tip of the screw. For instance, the tip thread portion may be located within three millimeters from the tip of the screw.

In summary, the present invention thus relates to a screw comprising a tip; a head with a bottom side having a peripheral cutting edge for cutting into the workpiece; and a thread extending from the tip towards the head, the thread having a thread lead. The peripheral cutting edge exhibits a serrated profile with a plurality of cutting teeth, each defined by a protrusion preceded by a leading recess and followed by a trailing recess when the screw is rotated. For each of the cutting teeth, a ratio between a lateral distance along a circumference of the head at the peripheral cutting edge from a bottom of the leading recess to a bottom of the trailing recess, and the circumference is less than or equal to a ratio between an axial distance from a tip of the protrusion between the leading recess and the trailing recess to the bottom of the trailing recess and the thread lead.

## Brief Description of the Drawings

These and other aspects of the present invention will now be described in more detail, with reference to the appended drawings showing an example embodiment of the invention, wherein:

Fig 1a schematically illustrates a screw according to an embodiment of the present invention;

Fig 1b is a close-up of the head of the screw in fig 1a, when the peripheral cutting edge of the head just makes contact with the surface of the workpiece;

Figs 2a-d are cross-section views of the head of the screw in fig 1a in different stages of penetration into the workpiece;

Fig 3 is a diagram illustrating the insertion torque for the screw in fig 1a as a function of insertion depth, in comparison with a traditional screw having a conical head;

Figs 4a-b schematically show the tip of the screw in fig 1a; and

Fig 5 is a diagram illustrating the thread depth of the screw in figs 4a-b as a function of the rotational angle from the thread starting point.

## Detailed Description of Example Embodiments

In the present detailed description, various embodiments of the screw according to the present invention are mainly discussed with reference to a wood screw having an unthreaded shank portion directly adjacent to the screw head.

It should be noted that this by no means limits the scope of the present invention, which equally well includes, for example, screws with other thread configurations and being suitable for other workpieces than wood-based products. For instance, the thread may run all the way from the tip to the head of the screw.

Moreover, the tip thread portion exhibiting a very rapid increase in thread depth has generally been illustrated as starting from the thread starting point. It should be noted that this need not necessarily be the case, but that the tip thread portion may start later along the thread than the thread starting point. Other configurations of the tip thread portion are also within the scope of the present invention.

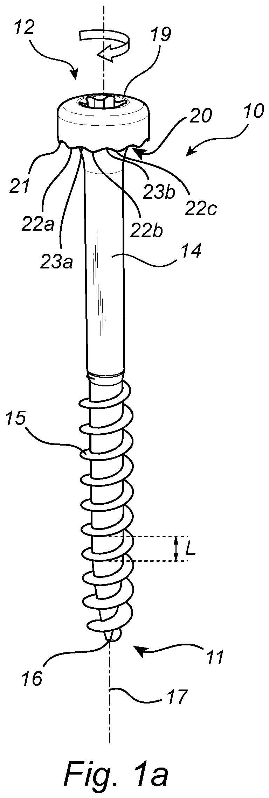

Referring to fig 1a, which is a side view of a screw 10 according to an example embodiment of the present invention, the screw 10 has a tip 11 and a head 12. As is indicated in fig 1a, the screw 10 has a body 14 and a thread 15 extending from a thread starting point 16 at the tip 11 towards the head 12 of the screw 10.

The thread 15 spirals along the screw 10 to allow the screw 10 to be screwed into a workpiece through clockwise rotation, as seen from the head 12 towards the tip 11, around a rotational axis 17. As is indicated in fig 1a, the thread exhibits a thread lead L.

The top side 19 of the head is configured to accommodate a tool for rotating the screw 10. In this case, the top side 19 of the head 12 is configured for insertion of a torx-tool, but obviously the top side 19 of the head 12 may be configured for any other suitable tool.

The bottom side 20 of the head 12 has a peripheral cutting edge 21 for cutting into the workpiece when the screw 10 is installed.

Between the peripheral cutting edge 21 and the body 14 of the screw, the bottom side 20 of the head 12 is undercut, such as concave, to collect and compress material from the workpiece when the head 12 of the screw 10 penetrates into the workpiece.

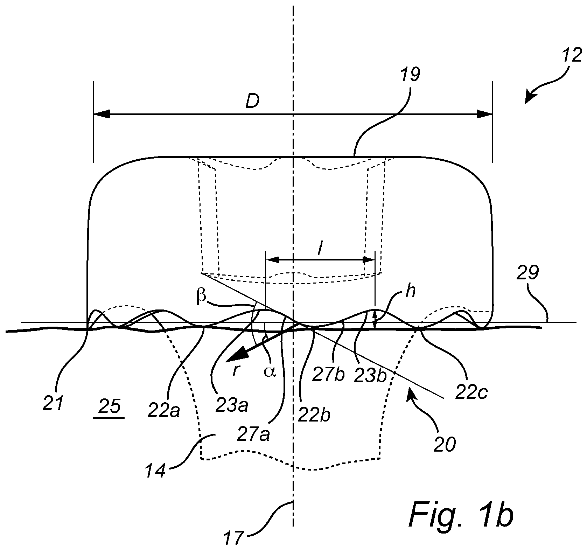

The peripheral cutting edge 21, which exhibits a serrated profile with protrusions 22a-c and recesses 23a-b (only a few of the protrusions and recesses are indicated by reference numerals to avoid cluttering the drawing), will be described in greater detail below with reference to fig 1b.

In fig 1b, the head 12 of the screw 10 in fig 1a is shown in an enlarged side view just when the protrusions 22a-c make contact with the surface of the workpiece 25.

As is schematically indicated in fig 1b, each protrusion 22b and its neighboring recesses 23a-b define a cutting tooth having a cutting edge 27a and a trailing edge 27b.

When the screw 10 is rotated, the cutting edge 27a will move in relation to the surface of the workpiece 25 in a cutting direction r defined by the thread lead L. Through the configuration of the peripheral cutting edge 21 the cutting action by the cutting edge 27a of each cutting tooth on the fibers in the workpiece will be shearing, which provides for a cleaner cut with less depression at the peripheral cutting edge 21 than if purely compressing cutting action is used.

To ensure shearing cutting action along the entire peripheral cutting edge 21, the peripheral cutting edge 21 is configured in such a way that the cutting edge of the next protrusion 22c starts to cut the workpiece before the bottom of the intermediate recess 23b contacts the workpiece 25.

In particular, the depth h of each recess 23a-b is sufficiently large to ensure that the screw is not moved an axial distance that is greater than this depth h when the screw is turned from the bottom of the leading recess 23a to the bottom of the trailing recess 23b. Mathematically, this is equivalent to requiring that the screw 10 fulfills the relation:

$$h/L \geq l/\pi D,$$

where h is the axial distance between the tip of a protrusion 22b and the bottom of its trailing recess 23b, $L$ is the thread lead, $l$ is the circumferential distance from the bottom of the leading recess 23a to the bottom of the trailing recess 23b, and D is the diameter of the head 12 at the peripheral cutting edge 21.

The effect of this configuration of the peripheral cutting edge 21 is a clean and well-defined cut through the workpiece 25. Due to the rounded shape of the protrusions 22a-c and the dimensions chosen (the distance h between tip and bottom is less than 1 mm), there is a reduced risk of injury or discomfort for the user handling the screw 10.

In fig 1b, the cutting direction r is indicated as forming a first angle $\alpha$ in relation to a plane 29 perpendicular to the rotational axis 17 of the screw. Furthermore, the tangent to a point along the cutting edge 27a is indicated as forming a second angle $\beta$ in relation to the cutting direction r. To provide for efficient cutting of fibers in the workpiece 25 at least partly through shearing cutting action, the average of the second angle $\beta_{average}$ is at least one and a half times the above-mentioned first angle $\alpha$.

For a curved cutting edge, the above-mentioned average of the second angle may be defined by the integral of the second angle along the cutting edge divided by the length of the cutting edge:

$$\beta_{average} = \frac{\int_0^s \beta(s)ds}{S},$$

where S is the total length of the cutting edge 27a. $\beta(s)$ is the angle between the tangent of the cutting edge 27a and the cutting direction r at position s along the cutting edge from the tip (s=0) of the protrusion 22b towards the bottom (s=S) of the leading recess 23a.

In addition to achieving a clean and well-defined cut through a fibrous workpiece, such as a wooden workpiece 25, the screw 10 according to embodiments of the present invention also provides for rapid installation to a pre-defined depth and a reliable fastening.

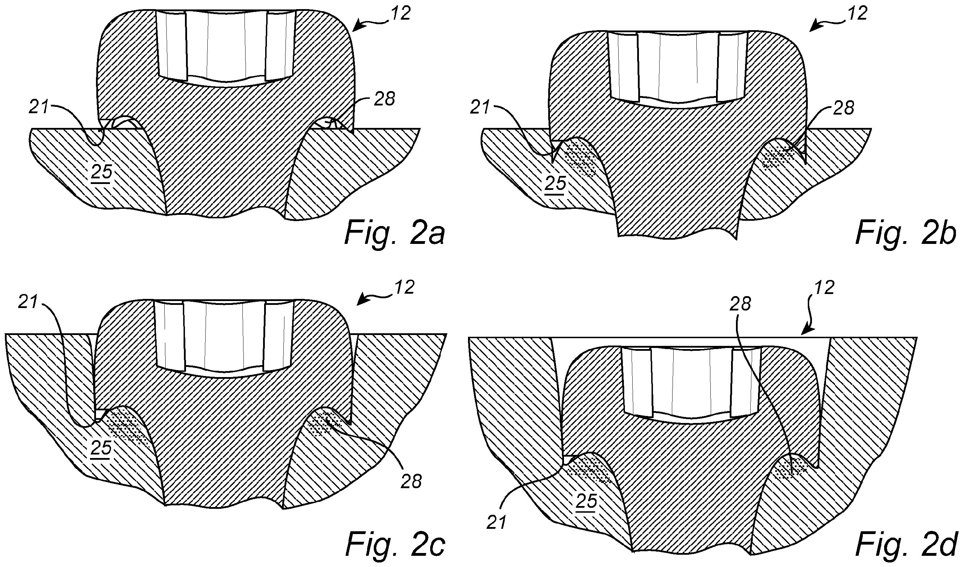

These further effects will now be explained with reference to figs 2a-d, which are cross-section views illustrating penetration of the screw head 12 into the workpiece 25.

Fig 2a schematically illustrates the situation just after the peripheral cutting edge 21 has started to cut into the workpiece 25. As explained above, the cutting edges (27a in fig 1b) have started to cut through fibers of the workpiece 25, but there is still air in the space 28 between the peripheral cutting edge 21 and the body 14 of the screw 10. The workpiece material under the bottom of the head 12 has not yet been compressed, and the Young's modulus of the workpiece material under the in the space 28 under the head 12 is still roughly the same as the Young's modulus of the workpiece material beside the head 12.

In fig 2b, the head 12 has penetrated further into the workpiece 25, so that the space 28 between the peripheral cutting edge 21 and the body 14 of the screw 10 is filled with somewhat compressed workpiece material that has been separated from the workpiece material beside the head 12 through the above-described cutting action of the peripheral cutting edge 21. It should be noted that the compression of the workpiece material in and under the space 28 between the peripheral cutting edge 21 and the body 14 of the screw 10 is almost purely due to an axial force. This compression will gradually increase the Young's modulus of the workpiece material under the head 12, which means that the torque required for continued rotation of the screw 10 will increase.

This continued compression of the workpiece material in and underneath the space 28 between the peripheral cutting edge 21 and the body 14 of the screw 10 is schematically illustrated by dots with increasing density in figs 2b-d. In addition to providing for a distinct and sharp increase in the torque required for continued rotation of the screw 10, the compression of the workpiece material also provides sealing as well as improved strength due to the almost purely axial force between the screw head 12 and the workpiece 25.

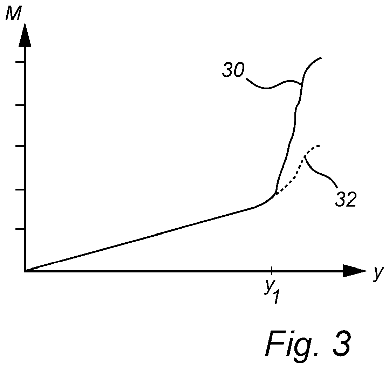

In the diagram in fig 3, the installation torque M is shown as a function of installation depth y (penetration distance of the tip 16 of the screw into the workpiece 25) for the screw 10 in fig 1a (the solid line 30). As a comparison, the same function is shown for a screw having the same screw body and thread configuration, but a conventional conical head with the same head diameter (the dashed line 32).

As can be seen in fig 3, the relation between installation torque M and installation depth y is the same for both screws until the installation depth $y_1$, where the peripheral cutting edge 21 first makes contact with the surface of the workpiece 25. The torque is still basically the same for both screws before workpiece material is compressed in the space 28 between the peripheral cutting edge 21 and the body 14 of the screw 10. Thereafter, the installation torque M increases much more rapidly with installation depth for the screw 10 in fig 1a than for the screw with the conventional conical head. From the diagram in fig 3, it is easy to understand that the torque setting to achieve an installation depth that is substantially the same for each installation will be much easier to achieve for a screw according to embodiments of the present invention than for a screw with a conventional head.

As was mentioned in the Summary section, the installation of the screw 10 can be further facilitated and be made even more time-saving by providing for an easier installation start, in addition to the distinct end of installation explained above.

The easier installation start is due to the configuration of the thread 15 at the tip 16 of the screw 10.

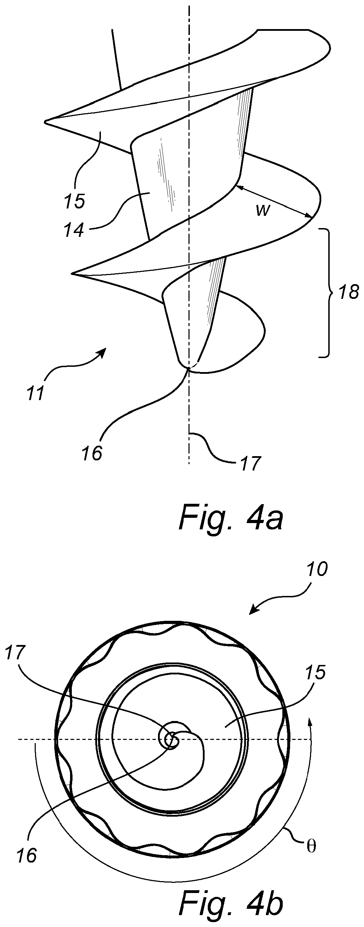

Referring to figs 4a-b, the thread 15 is configured to practically immediately present a substantial axially oriented driving surface to the workpiece. To that end, the screw 10 comprises a tip thread portion 18 exhibiting a very rapid increase in thread depth w. In the example embodiment of figs 4a-b, the tip thread portion extends from the thread starting point 16.

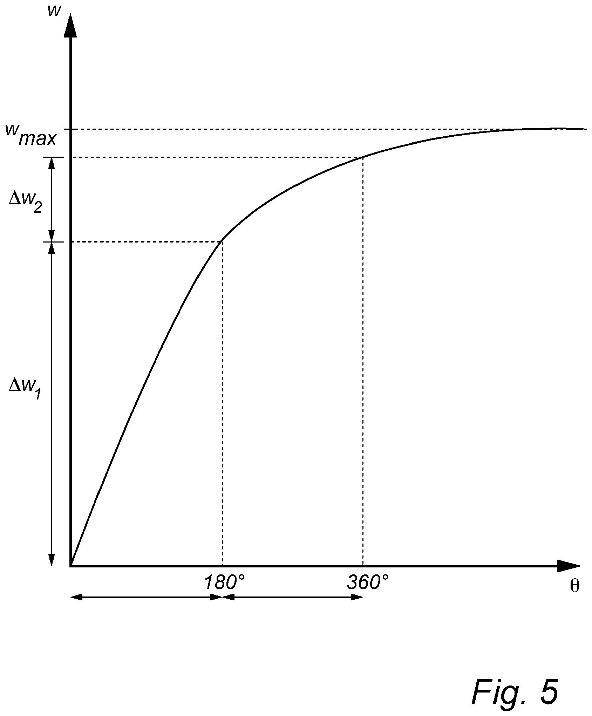

The configuration of the thread 15 in the vicinity of the tip 11 will now be described further with reference to fig 4b, which is a plane view of the tip 11 as seen along the rotational axis 17, and fig 5, which is a diagram showing the thread depth w as a function of rotational angle θ.

As can be seen in the diagram in fig 5, the thread depth $w(θ)$ of the screw 10 grows with increasing rotational angle θ with a first average rate of increase $K_1(θ)$ during a first half turn (from 0° to 180°) around the rotational axis 17 from the thread starting point 16, and with a second average rate of increase $K_2(θ)$ during the second half turn (from 180° to 360°).

For the screw 10 in figs 4a-b, the first average rate of increase $K_1(θ)≈0.007$ mm/°, and the second average rate of increase $K_2(θ)≈0.001$ mm/°.

Accordingly, the first average rate of increase is about seven times the second average rate of increase. This is a measure of the very rapid initial increase in the thread depth w. Due to this rapid initial increase in the thread depth, the torque applied to the screw 10 is translated to an axial driving force already from the very start of the rotation of the screw 10.

Furthermore, the tip thread portion 18 of the inventive screw 10 exhibits a thread depth increase $Δw_1$ within the tip thread portion 18 corresponding to at least one half of the maximum thread depth $w_{max}$. This is schematically indicated in fig 5.

The person skilled in the art realizes that the present invention by no means is limited to the preferred embodiments described above. On the contrary, many modifications and variations are possible within the scope of the appended claims. In the claims, the word "comprising" does not exclude other elements or steps, and the indefinite article "a" or "an" does not exclude a plurality. Any reference signs in the claims should not be construed as limiting the scope.

**Claims**

1. A screw (10) for fastening a workpiece (25) to a structural member by rotating said screw (10) in a rotational direction around a rotational axis (17) of said screw (10), said screw (10) comprising:

   a tip (11);
   a head (12) having a top side (19) for accommodating a tool to rotate said screw (10), and a bottom side (20) having a peripheral cutting edge (21) for cutting into said workpiece (25); and
   a thread (15) extending from said tip (11) towards said head (12), said thread (15) having a thread lead (L),
   wherein said peripheral cutting edge (21) exhibits a serrated profile with a plurality of cutting teeth, each of said cutting teeth being defined by a protrusion (22a, 22b, 22c) preceded by a leading recess (23a, 23b, 23c) and followed by a trailing recess (23a, 23b, 23c) when said screw (10) is rotated in said rotational direction, and wherein, for each of said cutting teeth, a ratio between a lateral distance along a circumference of said head (12) at said peripheral cutting edge (21) from a bottom of said leading recess (23a, 23b, 23c) to a bottom of said trailing recess (23a, 23b, 23c), and said circumference is less than or equal to a ratio between an axial distance from a tip of the protrusion (22a, 22b, 22c) between said leading recess (23a, 23b, 23c) and said trailing recess (23a, 23b, 23c) to said bottom of said trailing recess (23a, 23b, 23c) and said thread lead (L).

2. The screw (10) according to claim 1, wherein:

   each of said cutting teeth has a cutting edge (27a) between the bottom of said leading recess (23a, 23b, 23c) and the tip of said protrusion (22a, 22b, 22c);
   said cutting edge (27a) moves in a cutting direction (r) defined by said thread lead (L) when said screw (10) is rotated in said rotational direction, said cutting direction (r) forming a first angle (α) in relation to a plane (29) perpendicular to the rotational axis (17) of said screw (10); and
   an average angle ($β_{average}$) along said cutting edge (27a), between said cutting edge (27a) and said cutting direction (r) is at least one and a half times said first angle (α).

3. The screw (10) according to claim 1 or 2, wherein a width of said peripheral cutting edge (21), at the tip of each of said protrusions (22a, 22b, 22c) is less than 0.2 mm.

4. The screw (10) according to any one of the preceding claims, wherein said tip of each of said protrusions (22a, 22b, 22c) is rounded.

5. The screw (10) according to claim 4, wherein the tip of each of said protrusions (22a, 22b, 22c) exhibits a radius of curvature greater than 0.5 mm.

6. The screw (10) according to any one of the preceding claims, wherein said lateral distance along the circumference of said head (12) at said peripheral cutting edge (21) from the bottom of said leading recess (23a, 23b, 23c) to the bottom of said trailing recess (23a, 23b, 23c) is substantially the same for each of said cutting teeth.

7. The screw (10) according to any one of the preceding claims, wherein said serrated profile is continuous along the circumference of said head (12).

8. The screw (10) according to claim 7, wherein said serrated profile is undulating.

**9.** The screw (10) according to any one of the preceding claims, wherein said peripheral cutting edge (21) exhibits at least eight protrusions (22a, 22b, 22c).

**10.** The screw (10) according to any one of the preceding claims, wherein said axial distance from said tip to said bottom is less than 1 mm.

**11.** The screw (10) according to any one of the preceding claims, wherein:

said thread (15) has a thread depth that varies along a length of said screw between a minimum thread depth (w) and a maximum thread depth ($w_{max}$); and
said thread (15) comprises a tip thread portion (18) extending one half turn or less around said rotational axis (17) of said screw (10) and exhibiting a thread depth increase ($\Delta w_1$) within said tip thread portion (18) corresponding to at least one half of said maximum thread depth ($w_{max}$).

**Patentansprüche**

**1.** Schraube (10) zum Befestigen eines Werkstücks (25) an einem Strukturelement durch Drehen der Schraube (10) in einer Drehrichtung um eine Drehachse (17) der Schraube (10), wobei die Schraube (10) umfasst:

eine Spitze (11);
einen Kopf (12) mit einer Oberseite (19) zur Aufnahme eines Werkzeugs zum Drehen der Schraube (10) und einer Unterseite (20) mit einer umlaufenden Schneidkante (21) zum Einschneiden in das Werkstück (25); und
ein Gewinde (15), das sich von der Spitze (11) zum Kopf (12) hin erstreckt, welches Gewinde (15) eine Gewindesteigung (L) aufweist,
wobei die umlaufende Schneidkante (21) ein gezahntes Profil mit einer Vielzahl von Schneidzähnen aufweist, wobei jeder der Schneidzähne durch einen Vorsprung (22a, 22b, 22c) definiert ist, dem eine vordere Ausnehmung (23a, 23b, 23c) vorangeht und auf den eine hintere Ausnehmung (23a, 23b, 23c) folgt, wenn die Schraube (10) in die Drehrichtung gedreht wird, und
wobei für jeden der Schneidzähne ein Verhältnis zwischen einem seitlichen Abstand entlang eines Umfangs des Kopfes (12) an der umlaufenden Schneidkante (21) von einem Boden der vorderen Ausnehmung (23a, 23b, 23c) zu einem Boden der hinteren Ausnehmung (23a, 23b, 23c), und der Umfang kleiner oder gleich einem Verhältnis zwischen einem axialen Abstand von einer Spitze des Vorsprungs (22a, 22b, 22c) zwischen der vorderen Ausnehmung (23a, 23b, 23c) und der hinteren Ausnehmung (23a, 23b, 23c) zum Boden der hinteren Ausnehmung (23a, 23b, 23c) und der Gewindesteigung (L) ist.

**2.** Schraube (10) nach Anspruch 1, wobei:

jeder der Schneidzähne eine Schneidkante (27a) zwischen dem Boden der vorderen Ausnehmung (23a, 23b, 23c) und der Spitze des Vorsprungs (22a, 22b, 22c) aufweist;
wobei die Schneidkante (27a) sich in einer durch die Gewindesteigung (L) definierten Schneidrichtung (r) bewegt, wenn die Schraube (10) in die Drehrichtung gedreht wird, wobei die Schnittrichtung (r) einen ersten Winkel (a) in Bezug auf eine Ebene (29) senkrecht zur Drehachse (17) der Schraube (10) bildet; und
ein mittlerer Winkel ($\beta_{average}$) entlang der Schneidkante (27a) zwischen der Schneidkante (27a) und der Schneidrichtung (r) mindestens das ein und ein Halbfache des ersten Winkels (a) beträgt.

**3.** Schraube (10) nach Anspruch 1 oder 2, wobei eine Breite der umlaufenden Schneidkante (21) an der Spitze jedes der Vorsprünge (22a, 22b, 22c) kleiner als 0,2 mm ist.

**4.** Schraube (10) nach einem der vorhergehenden Ansprüche, wobei die Spitze jedes der Vorsprünge (22a, 22b, 22c) abgerundet ist.

**5.** Schraube (10) nach Anspruch 4, wobei die Spitze jedes der Vorsprünge (22a, 22b, 22c) einen Krümmungsradius größer als 0,5 mm aufweist.

**6.** Schraube (10) nach einem der vorhergehenden Ansprüche, wobei der seitliche Abstand entlang des Umfangs des Kopfes (12) an der umlaufenden Schneidkante (21) vom Boden der vorderen Ausnehmung (23a, 23b, 23c) zum Boden der hinteren Ausnehmung (23a, 23b, 23c) für jeden der Schneidzähne im Wesentlichen gleich ist.

**7.** Schraube (10) nach einem der vorhergehenden Ansprüche, wobei das gezahnte Profil entlang des Umfangs des Kopfes (12) durchgehend ist.

**8.** Schraube (10) nach Anspruch 7, wobei das gezahnte Profil wellenförmig ist.

**9.** Schraube (10) nach einem der vorhergehenden Ansprüche, wobei die umlaufende Schneidkante (21) mindestens acht Vorsprünge (22a, 22b, 22c) aufweist.

**10.** Schraube (10) nach einem der vorhergehenden Ansprüche, wobei der axiale Abstand von der Spitze zum Boden weniger als 1 mm beträgt.

**11.** Schraube (10) nach einem der vorhergehenden Ansprüche, wobei:

das Gewinde (15) eine Gewindetiefe aufweist, die entlang einer Länge der Schraube zwischen einer minimalen Gewindetiefe (w) und einer maximalen Gewindetiefe ($w_{max}$) variiert; und das Gewinde (15) einen Spitzengewindeabschnitt (18) umfasst, der sich eine halbe Umdrehung oder weniger um die Drehachse (17) der Schraube (10) erstreckt und eine Gewinde-Tiefenzunahme ($\Delta w_1$) im Spitzengewindeabschnitt (18) aufweist, entsprechend zumindest einer Hälfte der maximalen Gewindetiefe ($w_{max}$).

**Revendications**

**1.** Vis (10) pour fixer une pièce (25) à un élément structurel en faisant tourner ladite vis (10) dans une direction de rotation autour d'un axe de rotation (17) de ladite vis (10), ladite vis (10) comprenant :

une pointe (11) ; une tête (12) ayant un côté supérieur (19) pour recevoir un outil pour faire tourner ladite vis (10), et un côté inférieur (20) ayant un bord de coupe périphérique (21) pour couper dans ladite pièce (25) ; et un fil (15) s'étendant de ladite pointe (11) vers ladite tête (12), ledit fil (15) ayant un pas de filetage (L), dans lequel ledit bord de coupe périphérique (21) présente un profil dentelé avec une pluralité de dents de coupe, chacune desdites dents de coupe étant définie par une saillie (22a, 22b, 22c) précédée d'un évidement avant (23a, 23b, 23c) et suivie par un évidement arrière (23a, 23b, 23c) lorsque ladite vis (10) est tournée dans ladite direction de rotation, et dans lequel, pour chacune desdites dents de coupe, un rapport entre une distance latérale le long d'une circonférence de ladite tête (12) au niveau dudit bord de coupe périphérique (21) à partir d'un fond dudit évidement avant (23a, 23b, 23c) vers un fond dudit évidement arrière (23a, 23b, 23c), et ladite circonférence est inférieur ou égal à un rapport entre une distance axiale à partir d'un bout de la saillie (22a, 22b, 22c) entre ledit évidement avant (23a, 23b, 23c) et ledit évidement arrière (23a, 23b, 23c) vers ledit fond dudit évidement arrière (23a, 23b, 23c) et ledit pas de filetage (L).

**2.** Vis (10) selon la revendication 1, dans laquelle :

chacune desdites dents de coupe présente un bord de coupe (27a) entre le fond dudit évidement avant (23a, 23b, 23c) et la pointe de ladite saillie (22a, 22b, 22c) ; ledit bord de coupe (27a) se déplace dans une direction de coupe (r) définie par ledit pas de filetage (L) lorsque ladite vis (10) est tournée dans ladite direction de rotation, ladite direction de coupe (r) formant un premier angle (a) par rapport à un plan (29) perpendiculaire à l'axe de rotation (17) de ladite vis (10) ; et un angle moyen ($\beta_{moyen}$) le long dudit bord de coupe (27a), entre ledit bord de coupe (27a) et ladite direction de coupe (r) est au moins une fois et demie ledit premier angle (a).

**3.** Vis (10) selon la revendication 1 ou 2, dans laquelle une largeur dudit bord de coupe périphérique (21), à la pointe de chacune desdites saillies (22a, 22b, 22c) est inférieure à 0,2 mm.

**4.** Vis (10) selon l'une quelconque des revendications précédentes, dans laquelle ladite pointe de chacune desdites saillies (22a, 22b, 22c) est arrondie.

**5.** Vis (10) selon la revendication 4, dans laquelle la pointe de chacune desdites saillies (22a, 22b, 22c) présente un rayon de courbure supérieur à 0,5 mm.

**6.** Vis (10) selon l'une quelconque des revendications précédentes, dans laquelle ladite distance latérale le long de la circonférence de ladite tête (12) au niveau dudit bord de coupe périphérique (21) depuis le fond dudit évidement avant (23a, 23b, 23c) au fond dudit évidement arrière (23a, 23b, 23c) est essentiellement le même pour chacune desdites dents de coupe.

**7.** Vis (10) selon l'une quelconque des revendications précédentes, dans laquelle ledit profil dentelé est continu le long de la circonférence de ladite tête (12).

**8.** Vis (10) selon la revendication 7, dans laquelle ledit profil dentelé est ondulé.

**9.** Vis (10) selon l'une quelconque des revendications précédentes, dans laquelle ledit bord de coupe périphérique (21) présente au moins huit saillies (22a, 22b, 22c).

**10.** Vis (10) selon l'une quelconque des revendications précédentes, dans laquelle ladite distance axiale de ladite pointe audit fond est inférieure à 1 mm.

**11.** Vis (10) selon l'une quelconque des revendications précédentes, dans lequel :

ledit fil (15) présente une profondeur de filetage qui varie le long d'une longueur de ladite vis entre une profondeur de filetage minimum (w) et une profondeur de filetage maximum ($w_{max}$) ; et ledit fil (15) comprend une partie de filetage de pointe (18) s'étendant d'un demi-tour ou moins autour dudit axe de rotation (17) de ladite vis (10) et présentant une augmentation de la profondeur de filetage ($\Delta w_1$) à l'intérieur de ladite partie de filetage de pointe (18)) correspondant à au moins la moitié de ladite profondeur maximale de filetage ($w_{max}$).

Fig. 1a

*Fig. 1b*

*Fig. 2a*

*Fig. 2b*

*Fig. 2c*

*Fig. 2d*

*Fig. 3*

Fig. 4a

Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6616391 B